# EUROPEAN PATENT SPECIFICATION

(11) **EP 0 622 257 B1**
(45) Date of publication and mention of the grant of the patent: **02.07.1997**
(21) Application number: 94105702.8
(22) Date of filing: 13.04.1994
(51) Int. Cl.: B60H 1/34

(54) **Air vent for motor vehicles**
Belüftungsdüse für Kraftfahrzeuge
Buse de délivrance d'air pour véhicules à moteur

(30) Priority: 30.04.1993 IT TO930092 U
(43) Date of publication of application: 02.11.1994
(73) Proprietor: FOGGINI PROGETTI S.r.l., I-10092 Beinasco Torino (IT)
(72) Inventor: Foggini, Paolo, I-10020 Revigliasco Moncalieri (Torino) (IT); Davico, Claudio, I-10094 Giaveno (Torino) (IT)
(74) Representative: Modiano, Guido, Dr.-Ing.

(56) References cited:
- EP-A- 0 405 380
- DE-A- 2 307 439
- DE-A- 3 626 790
- DE-A- 3 835 614

## Description

The present invention relates to an air vent for motor vehicles.

As is known, air vents include diffusion means that direct the flow of air substantially within a frustum-shaped space, the smaller cross-section whereof coincides with the cross-section of the diffuser.

Typically, these orientable diffusion means include a first row of vanes and a second row of vanes that can rotate about respective mutually perpendicular steering axes. According to a predominantly adopted arrangement, the vanes of the first row are individually pivoted to a frame that rigidly supports the vanes of the second row and is in turn pivoted to the body of the diffuser.

This typical arrangement of known vents has several drawbacks, the main one being a considerable structural complication, which negatively affects the manufacturing costs and the functionality of the vent. Furthermore, the known air vents do not allow the air flow to be directed in a fully satisfactory manner, due to the fact that the rows of vanes are arranged in axial succession, the second row being located downstream of the first row relatively to the motion of the air stream.

Furthermore, the individual rows of vanes require respective and different orientation maneuvers, thus complicating the adjustment operation to the detriment of easy use.

In order to attempt to eliminate these drawbacks, it has already been proposed to use a single orientable grille with a substantially spherical body that is slideably rotatable within a corresponding spherical seat of the body of the air vent. However, air vents of this type manufactured so far have not yielded satisfactory results, due to the difficulty in providing and maintaining the correct sliding contact between the body of the grille and the seat containing it, since this contact is intensely affected by wear, which loosens the sliding contact and allows unintended movements of the grille, and by the presence of dust and foreign matter that easily jam said grille. Furthermore, known air vents of this type have a complicated structure and entail considerable difficulties in assembling their various components.

The aim of the present invention is essentially to eliminate these drawbacks, and within the scope of this general aim the invention has the important objects of providing an air vent that is structurally very simple, reliable in operation, substantially wear-free and insensitive to the presence of dust and/or foreign matter.

Another object of the invention is to provide an air vent including a limited number of components that can be easily assembled, to the advantage of the assembly operations and thus of the manufacturing costs.

With this aim, these objects and others in view, there is provided, according to the present invention as stated in claim 1. An air vent is provided with an intake and a diffuser that includes an orientable diffusion grille, characterized in that the orientable diffusion grille is connected to the intake body with the interposition of an annular frame that acts as a ball-and-socket connection element for said grille, said diffusion grille being pivoted to the frame at a first diameter thereof, said frame being in turn pivoted to the intake at a second diameter thereof which is at right angles to the first one.

According an other aspect of the invention, the diffusion grille includes a series of axial channels and a border shaped like a spherical segment which contains the frame and is accommodated, without sliding contact, in a corresponding spherical seat formed on the body of the diffuser.

In order to accommodate the diffusion grille in the spherical seat of the diffuser, said diffuser is detachably connected to the air vent intake, advantageously by means of a snap-together coupling produced by retention teeth that are formed on the intake and cooperate with tooth engagement slots provided on the diffuser, or vice versa.

Further characteristics and advantages of the present invention will become apparent from the detailed description that follows and with reference to the accompanying drawings, illustrated only by way of non-limitative example, wherein:
figure 1 is an exploded view of the air vent;
figure 1a is an enlarged-scale view of a detail of figure 1;

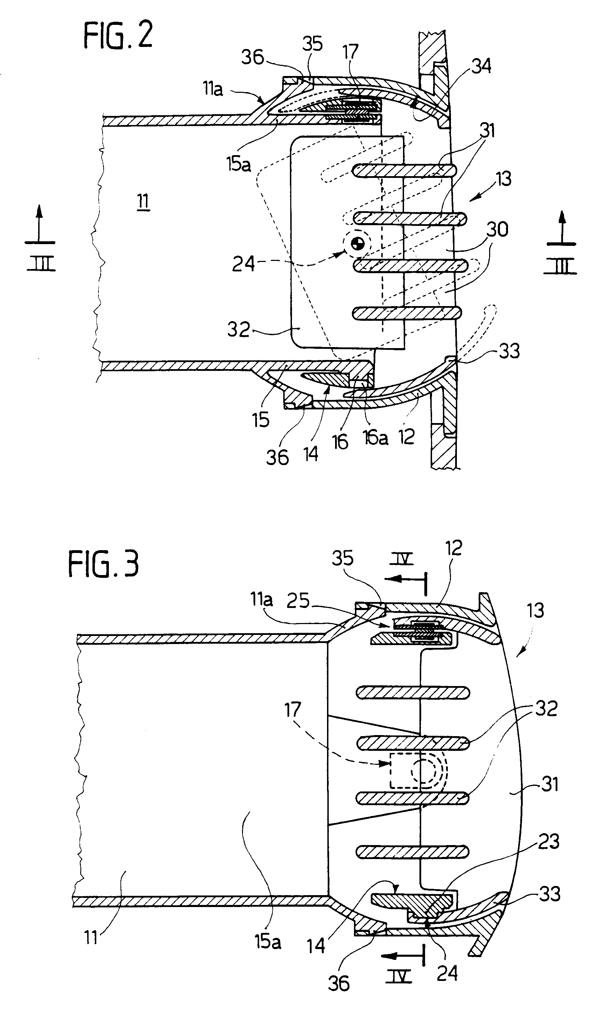

figure 2 is an axial sectional view of the air vent, taken along the plane II-II of figure 1;
figure 3 is an axial sectional view, rotated through 90^{o} with respect to figure 2 and taken along the plane III-III of figure 2;
figure 4 is a transverse sectional view, taken along the plane IV-IV of figure 2.

In the drawings, the reference numeral 10 generally designates the air vent, which includes an intake 11, with a flared end collar 11a, a diffuser 12 and an orientable grille 13, all advantageously made of a thermoplastic polymeric material.

According to the invention, the orientable grille 13 is connected to the intake 11 with the interposition of an annular frame 14 which is also preferably made of a thermoplastic polymeric material and acts as an element for ball-and-socket articulated connection that allows said grille to assume a generic angular position around a point that lies on the axis of the intake 11.

For this purpose, the frame 14 is pivoted, at a first diameter "a" thereof, to a pair of supporting arms 15-15a which are rigidly coupled to the intake 11. As shown in the figure, the pivoting means are advantageously constituted by a pivot 16, which is supported by the arm 15 and cooperates with a hole 16a of the frame 14, and by a braked rotational device 17, of the type described in European Patent Application No. 90111978.4 (EP-A-0 405 380) filed on June 25, 1990 in the name of the same Applicant, which cooperates with a seat of the arm 15a to brake, by friction coupling, the oscillation of the frame 14.

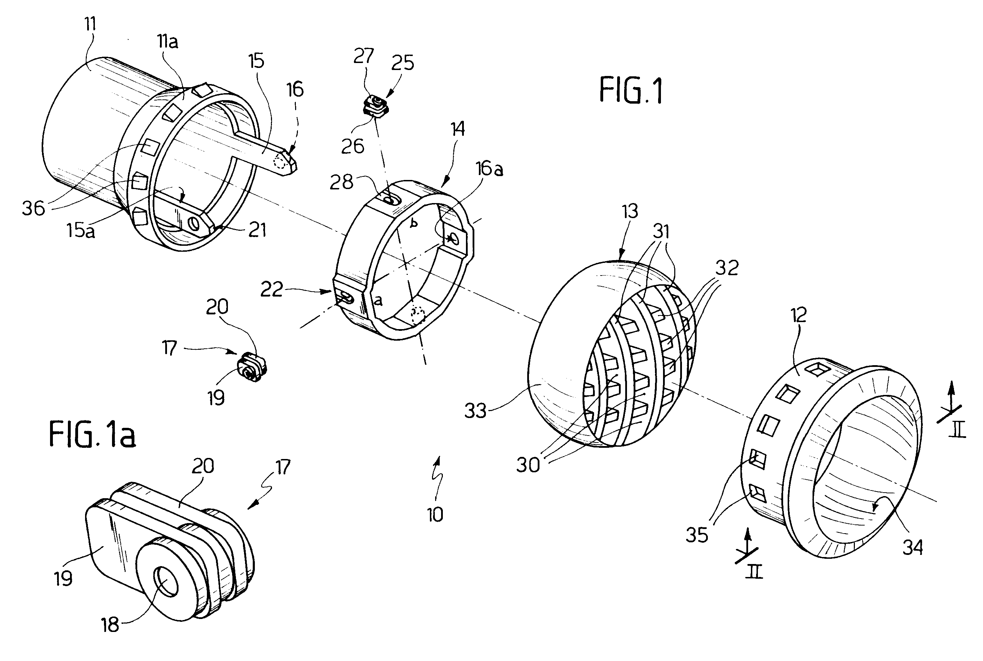

The per se known braked rotational device 17 comprises (figure 1a) an articulation roller 18 and two mutually adjacent flanges 19-20 that respectively fit in a recessed seat 21 of the arm 15a and in a recessed seat 22 of the frame 14.

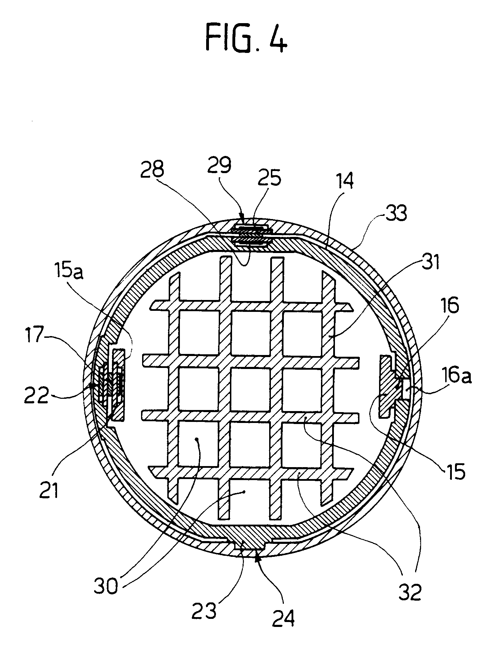

In a similar manner, the grille 13 is pivoted to the frame 14 at a second diameter "b", which is at right angles to the diameter "a", by means of a pivot 23 of the frame, which cooperates with a seat 24 of the body of the grille, and by means of a braked rotational device 25 which is identical to the device 17 and the flanges 26-27 whereof are fitted in corresponding recessed seats 28-29 formed on the frame 14 and respectively on the body of the grille 13. Said grille comprises a series of axial delivery channels 30 which are preferably delimited by vertical and horizontal partitions 31-32 and a border 33 which is substantially shaped like a spherical segment and contains the frame 14 (figure 4); said border is accommodated, without any sliding contact, in a corresponding seat 34 of the diffuser 12 which is shaped like a spherical segment and is connected to the flared collar 11a of the intake 11.

Due to the spherical-segment shape of the border 33 and of the seat 34, the former abuts against the latter, and in order to allow the preliminary assembly of the grille 13 and of the frame 14 the diffuser 12 is detachably connected to the intake 11, advantageously by means of snap-together connecting elements that use the elasticity of the thermoplastic polymeric material of which the intake and the diffuser are both made. For this purpose, the diffuser 12 is provided with a collar 12a which is arranged as an extension of the seat 34 and has a ring of through slots 35. Corresponding flexible retention teeth 36 provided on the end collar 11a of the intake 11 cooperate in a snap-together manner with the slots 35.

From the above description it can be easily understood that the assembly of the various described components is extremely simple, since it includes only the operations for the pivoting of the grille 13 to the frame 14, the pivoting of the frame 14 to the intake 11, and the snap-together insertion of the diffuser 13 on the intake 11.

Naturally, the effects of the present invention also cover models that achieve equal utility by using the same inventive concept defined by the appended claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Air vent for motor vehicles, comprising an intake (11), a diffuser (12) and an orientable diffusion grille (13), characterized in that the diffusion grille (13) is connected to the intake body (11) with the interposition of an annular frame (14) that is pivoted to the intake (11) and to the grille (13) and acts as a ball-and-socket connection element that allows said grille to assume an angular position around a point that lies on the axis of the intake.

2. Air vent according to claim 1, characterized in that the orientable diffusion grille (13) is pivoted to the frame (14) at a first diameter (a) thereof and in that the frame (14) is in turn pivoted to the intake (11) at a second diameter (b) thereof which is at right angles to the first one (a).

3. Air vent according to claims 1 and 2, characterized in that the frame (14) is pivoted to the grille (13) and to the intake (11) with the interposition of rotational devices (17-25) that can brake, by friction coupling, the relative angular movements between the grille and the frame and between said frame and the intake.

4. Air vent according to the preceding claims, characterized in that the orientable diffusion grille (13) includes a series of axial delivery channels (30) surrounded by a border (33) which is substantially shaped like a spherical segment, contains the frame (14) and is accommodated, without sliding contact, in a corresponding spherical seat (34) of the diffuser (12).

5. Air vent according to the preceding claims, characterized in that the intake (11) and the diffuser (12) are detachably connected by means that include a ring of through slots (35) provided on an extension (12a) of the diffuser and a plurality of flexible retention teeth (36) which are provided on a collar (11a) of the intake (11); said teeth and said slots cooperating by snap-together engagement.

6. Air vent according to the preceding claims, characterized in that the intake (11), the diffuser (12), the grille (13) and the frame (14) are made of a thermoplastic polymeric material.

## Patentansprüche

1. Luftaustritt für Kraftfahrzeuge mit einem Einlaß (11), einem Diffusor (12) und einem ausrichtbaren Diffusionsgitter (13), **dadurch gekennzeichnet, daß** das Diffusionsgitter (13) mit dem Einlaßkörper (11) unter Zwischenlage eines ringförmigen Rahmens (14) verbunden ist, welcher am Einlaß (11) und am Gitter (12) schwenkbar angelenkt ist und als Kugel/Pfanne-Verbindungselement wirkt, welches dem besagten Gitter erlaubt, eine Winkelstellung um einen Punkt einzunehmen, der auf der Achse des Einlasses liegt.

2. Luftaustritt nach Anspruch 1, **dadurch gekennzeichnet, daß** das ausrichtbare Diffusionsgitter (13) am Rahmen (14) an einem ersten Durchmesser (a) davon schwenkbar angelenkt ist, und daß der Rahmen (14) seinerseits am Einlaß (11) an einem zweiten Durchmesser (b) davon schwenkbar angelenkt ist, der im rechten Winkel zum ersten (a) steht.

3. Luftaustritt nach Ansprüchen 1 und 2, **dadurch gekennzeichnet, daß** der Rahmen (14) am Gitter (13) und am Einlaß (11) unter Zwischenlage von Dreheinrichtungen (17-25) schwenkbar angelenkt ist, welche durch Reibungskupplung die relativen Winkelbewegungen zwischen dem Gitter und dem Rahmen und zwischen dem besagten Rahmen und dem Einlaß bremsen können.

4. Luftaustritt nach den vorhergehenden Ansprüchen, **dadurch gekennzeichnet, daß** das ausrichtbare Diffusionsgitter (13) eine Reihe von axialen, von einem Rand (33) umgebenen Zuführungskanälen (30) aufweist, welcher im wesentlichen wie ein Kugelsegment ausgebildet ist, den Rahmen (14) enthält und ohne Gleitkontakt in einem entsprechenden Kugelsitz (34) des Diffusors (12) aufgenommen ist.

5. Luftaustritt nach den vorhergehenden Ansprüchen, **dadurch gekennzeichnet, daß** der Einlaß (11) und der Diffusor (12) durch Mittel abnehmbar verbunden sind, die einen Ring von auf einer Verlängerung (12a) des Diffusors vorgesehenen Durchgangsschlitzen (35) und eine Vielzahl von flexiblen Haltezähnen (36) aufweisen, welche auf einem Kragen (11a) des Einlasses (11) vorgesehen sind, wobei die besagten Zähne und die besagten Schlitze durch eine Schnappverbindung zusammenwirken.

6. Luftaustritt nach den vorhergehenden Ansprüchen, **dadurch gekennzeichnet, daß** der Einlaß (11), der Diffusor (12), das Gitter (13) und der Rahmen (14) aus einem thermoplastischen Polymermaterial bestehen.

## Revendications

1. Bouche d'aération pour véhicules automobiles, comprenant une entrée (11), un diffuseur (12) et une grille de diffusion orientable (13), caractérisée en ce que la grille de diffusion (13) est connectée au corps d'entrée (11) moyennant l'interposition d'un cadre annulaire (14), qui est monté pivotant sur l'entrée (11) et sur la grille (13) et agit en tant qu'élément de liaison à rotule qui permet à la grille de prendre une position angulaire autour d'un point qui est situé sur l'axe de l'entrée.

2. Bouche d'aération selon la revendication 1, caractérisée en ce que la grille de diffusion orientable (13) est montée pivotante sur le cadre (14) suivant un premier diamètre (a) du cadre et en ce que le cadre (14) est à son tour monté pivotant sur l'entrée (11), autour d'un second diamètre (b) de cette dernière, qui est perpendiculaire au premier diamètre (a).

3. Bouche d'aération selon les revendications 1 et 2, caractérisée en ce que le cadre (14) est monté pivotant sur la grille (13) et sur l'entrée (11), moyennant l'interposition de dispositifs d'entraînement en rotation (17-25) qui peuvent freiner, au moyen d'un accouplement à friction, les déplacements angulaires relatifs entre la grille et le cadre et entre le cadre et l'entrée.

4. Bouche d'aération selon les revendications précédentes, caractérisée en ce que la grille de diffusion orientable (13) comprend une série de canaux axiaux de délivrance (30), entourés par une couronne (33), qui possède essentiellement la forme d'un segment sphérique, contient le cadre (14) et est logée, sans contact coulissant, dans un logement sphérique correspondant (34) du diffuseur (12).

5. Bouche d'aération selon les revendications précédentes, caractérisée en ce que l'entrée (11) et le diffuseur (12) sont raccordés de façon amovible par des moyens qui incluent un anneau de fentes traversantes (35) aménagées dans un prolongement (12a) du diffuseur, et une pluralité de dents flexibles de retenue (36) qui sont prévues sur un collet (11a) de l'entrée (11); lesdites dents et lesdites fentes coopérant au moyen d'un engagement à encliquetage.

6. Bouche d'aération selon les revendications précédentes, caractérisée en ce que l'entrée (11), le diffuseur (12), la grille (13) et le cadre (14) sont réalisés on un matériau polymère thermoplastique.
